# EUROPÄISCHE PATENTSCHRIFT

(11) **EP 2 979 529 B1**
(45) Veröffentlichungstag und Bekanntmachung des Hinweises auf die Patenterteilung: **07.02.2018**
(21) Anmeldenummer: 15179387.4
(22) Anmeldetag: 31.07.2015
(51) Int. Cl.: A01B 73/04, A01B 73/06, A01D 84/00

(54) **ZUSAMMENKLAPPBARE LANDWIRTSCHAFTLICHE MASCHINE**
COLLAPSIBLE AGRICULTURAL MACHINE
MACHINE AGRICOLE REPLIABLE

(30) Priorität: 31.07.2014 DE 102014110919
(43) Veröffentlichungstag der Anmeldung: 03.02.2016
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB

(56) Entgegenhaltungen:
- DE-A1- 10 351 272
- DE-U1- 9 311 671
- DE-U1- 20 004 538
- US-A1- 2014 069 670

## Beschreibung

Die Erfindung betrifft eine zusammenklappbare landwirtschaftliche Maschine gemäß dem Oberbegriff des Anspruchs 1.

Eine gattungsgemäße landwirtschaftliche Maschine in Form eines Bandschwaders oder Mergers ist der DE 60 2004 009 338 T2 oder der US 7,310,929 B2 zu entnehmen.

Die US2014/0069670 A1 offenbart einen Maschinenrahmen, der Striegelzinken trägt, wobei die die Striegelzinken tragenden Ausleger mit einem, den Ausleger tragenden Zentrahlrahmen zusammen verschwenkbar sind.

In bekannter Weise umfasst so eine landwirtschaftliche Maschine zur Bearbeitung von Grünland einen Maschinenrahmen, der eine Deichsel zur Verbindung mit einer Zugmaschine und einen mit der Deichsel verbundenen von Haupträdern getragenen Zentralrahmen aufweist. Die Haupträder tragen den Zentralrahmen sowohl in einer Transport- als auch in einer Arbeitsposition. Ferner ist an den Zentralrahmen wenigstens ein Auslegerarm über ein Auslegerlager angebunden, wobei das Auslegerlager eine Auslegerlager-Achse definiert. An dem Auslegerarm ist wenigstens ein Arbeitswerkzeug angeordnet, wobei das Arbeitswerkzeug mit dem Auslegerarm um die Auslegerlager-Achse drehbar gelagert ist. Die Bodenanpassung über den Auslegerarm in Arbeitsposition erfolgt durch eine Schwenken um die Auslegerlager-Achse. Der Zentralrahmen ist über ein Zentralrahmenlager, das eine Zentralrahmenlager-Achse definiert, mit der Deichsel verbunden, wodurch der Zentralrahmen um die Zentralrahmenlager-Achse drehbar zur Deichsel angeordnet ist, wobei der Zentralrahmen in eine erste einer Arbeitsposition zugeordneten Schwenkposition und in eine zweite einer Transportposition zugeordneten Schwenkposition gebracht werden kann, insbesondere in der jeweiligen Position arretierbar ist. Zwei Auslegerarme sind beidseitig des Zentralrahmens vorgesehen, an welchen je wenigstens ein Arbeitswerkzeug angeordnet ist. Es ist Aufgabe der Erfindung, eine landwirtschaftliche Maschine großer Arbeitsbreite anzugeben, die eine geringe Transportbreite ermöglicht.

Erfindungsgemäß umfasst das Arbeitswerkzeug einen Erntegutaufnehmer, der eine Welle aufweist, um welche Zinkenscheiben, insbesondere mit einem Zinkenflugkreis, zur Aufnahme von Erntegut rotieren. Bei einer solchen Gestaltung kann vorgesehen sein, dass die Welle von Wellenlagern getragen wird, wobei erfindungsgemäß eine horizontale Wellenebene, in welcher die Welle und insbesondere die Lagermittelpunkte der Wellenlager bei ebenem Boden liegen, einen Abstand zum niedrigsten Punkt der Auslegerlager-Achse im Auslegerschwenklager aufweist, der mehr als anderthalb mal so groß ist, wie der Abstand der Auslegerlager-Achse zur Wellenachse, insbesondere zur Verbindungslinie der Mittelpunkte der Wellenlager. Der Abstand der Verbindungslinie der Mittelpunkte der Wellenlager zum Boden ist insbesondere kleiner als der Abstand zur Auslegerlager-Achse.

Durch eine solche geneigte Auslegerlager-Achse kann bei Verschwenken des Auslegerarms eine Kollision der Arbeitswerkzeuge weitgehend vermieden werden. Vorzugsweise kann das Zentralrahmenlager so ausgestaltet sein, dass die Zentralrahmenlager-Achse parallel zur Rad-Achse der Haupträder ausgerichtet ist.

Bevorzugt können die Haupträder derart mit dem Zentralrahmen verbunden sind, dass bei Verschwenken des Zentralrahmens die Haupträder der Schwenkbewegung des Zentralrahmens folgen, so dass die Haupträder mit dem Zentralrahmen um die Zentralrahmenlager-Achse geschwenkt werden.

Dies hat zur Folge, dass eine Veränderung des Abstands in Fahrtrichtung zur Zentralrahmenlager-Achse erfolgt, was insbesondere bei einer Schwenkbewegung von der Arbeitsposition in die Transportposition zu einer Verkürzung des Abstands der Haupträder zu einer Zugmaschine führt. Dies verbessert das Transportverhalten der Landmaschine, insbesondere bei der Kurvenfahrt, erheblich.

Der Zentralrahmen kann bevorzugt in einer U-förmigen Grundgestaltung ausgebildet sein. Die Räder sind dabei vorzugsweise an dem dem Boden zugewandten offenen Ende des Zentralrahmens angeordnet.

Diese Anordnung sorgt für eine besonders große Durchgangshöhe für in der Mitte der landwirtschaftlichen Maschine liegendes oder abgelegtes Erntegut, wodurch Aufstauungen vermieden werden können.

Die Auslegerlager-Achse liegt insbesondere orthogonal zur Zentralrahmenlager-Achse, Dadurch kann eine zur Deichsel parallele Ausrichtung der Arbeitswerkzeuge in Transportposition bereitgestellt werden, was zu einem möglichst schmalen Transportmaß führt. Das Auslegerlager ist vorzugsweise in vertikaler Richtung zwischen der Radaufhängung und dem Zentralrahmenlager angeordnet. Dadurch kann die Durchgangshöhe im Bereich des Auslegerlagers möglichst groß gewählt werden.

Weiter bevorzugt kann das Auslegerlager in horizontaler Quer-Richtung zwischen Deichsel und Hauptrad liegen. Dadurch kann bei minimaler Transportbreite eine maximale Durchgangshöhe erreicht werden.

In einer weiteren bevorzugten Ausgestaltung erstreckt sich das Auslegerlager über einen Großteil der Erstreckung des Zentralrahmens in Fahrtrichtung. Das Auslegerlager kann mehrere Drehlager umfassen.

Es kann ferner vorgesehen sein, dass das Auslegerlager eine axiale Ausdehnung von 500 mm bis 1000 mm hat. Die axiale Ausdehnung des Auslegerlagers beschreibt die Ausdehnung, über welche Querkräfte auf das Auslegerlager aufgenommen werden können, Ein Auslegerlager kann mehrere Drehlager umfassen, die um die gleiche Auslegerlager-Achse angeordnet sind. Die Auslegerlagerausdehnung bezieht sich dann auf die am weitesten beabstandeten Drehlager. Durch eine solche Auslegerlagergestaltung kann eine ausreichende Abstützung für am Auslegerarm angeordnete Arbeitswerkzeuge zur Grünlandbearbeitung gewährleistet werden, wobei zudem eine möglichst gewichtsarme Konstruktion ermöglicht wird.

Vorzugsweise ist der Auslegerarm derart gestaltet, dass dieser um das am Zentralrahmen angeordnete Hauptrad einseitig herumgeführt ist. Dadurch kann eine besonders geringe Transporthöhe erreicht werden.

In einer vorteilhaften Ausgestaltung kann das Auslegerlager derart gestaltet sein, dass es eine am Zentralrahmen angeordnete stangenförmige Achse aufweist, die von einem am Auslegerarm angeordneten Rohr umschlossen ist. Vorzugsweise ist das Auslegerlager in der Art eines Gleitlagers ausgeführt, Es ist auch denkbar, Wälzlager, die beabstandet angeordnet sind, in diese Anordnung zu integrieren.

Gemäß einer weiteren vorteilhaften Ausgestaltung kann am Auslegerarm ein Auslegerrad, insbesondere fest, angeordnet sein. Dies sorgt für eine verbesserte Bodenanpassung der am Auslegerarm angeordneten Arbeitswerkzeuge, wobei die Gewichtskräfte teilweise über das Auslegerrad aufgenommen werden können. Dies macht eine Entlastungskonstruktion für den Auslegerarm überflüssig. Auch auf Nachlaufräder kann durch eine solche Anordnung verzichtet werden.

Im Falle eines in Querrichtung teleskopierbaren Auslegerarms erweist sich die Verwendung eines Auslegerrads als besonders günstig, da sich dadurch die Anforderungen an die Entlastung der Arbeitseinheit gegenüber dem Auslegerarm in den unterschiedlichen Teleskoppositionen nicht verändern. Entsprechend kann auf komplizierte Nachstellmechanismen zur Entlastung der Arbeitseinheit verzichtet werden.

Das Auslegerrad kann vorzugsweise an dem dem Zentralrahmen abgewandten Ende des Auslegerarms angeordnet sein. Dies stellt eine besonders einfache und effiziente Art der Befestigung dar und gewährleistet dennoch eine ideale Bodenführung.

Idealerweise kann das Auslegerrad zum Hauptrad derart in Fahrtrichtung versetzt sein, dass in Arbeitsposition das Hauptrad das Auslegerrad entgegen der Fahrtrichtung überragt. Auf diese Weise kann der Zusammenklappvorgang ohne vorherige Verstellung des Auslegerrads durchgeführt werden. Die Auslegerräder weisen dadurch in Transportposition automatisch eine ausreichende Bodenfreiheit auf.

In einer weiteren vorteilhaften Ausgestaltung kann die Anordnung der Haupträder so erfolgen, dass eine Orthogonale auf die Radachse, die durch die Zentralrahmenschwenklager-Achse verläuft, in Arbeitsposition entgegen der Fahrtrichtung insbesondere in einem Winkel von 30° bis 60° gegenüber der Deichsel geneigt ist. Dadurch kann gewährleistet werden, dass bei einer Verschwenkung des Zentralrahmens um etwa 90° in Fahrtrichtung ein idealer Bodenabstand des Auslegerarms sowohl in Transportlage als auch in Arbeitsposition erreicht wird. Die Haupträder werden dadurch in Transportposition näher an das Zugfahrzeug herangeführt, wodurch sich die Spurtreue im Straßenverkehr verbessert.

Die Anordnung der Auslegerlager-Achse in Vertikalrichtung zwischen Hauptrad-Achse und Zentralrahmenlager-Achse, kann bei Wannen- oder Kuppenlage zu einer Kollision der an den Auslegerarmen befestigten Arbeitswerkzeuge in der Mitte der landwirtschaftlichen Maschine führen. Diese Kollisionslage kann entschärft werden, wenn das Auslegerlager derart ausgestaltet ist, dass die Auslegerlager-Achse in Arbeitsposition gegenüber dem ebenen Boden geneigt ist.

Vorzugsweise kann ein Arbeitswerkzeug über ein Viergelenk - eine Lenkeranordnung, umfassend einen Oberlenker und einen Unterlenker, wobei Ober- und Unterlenker arbeitswerkzeugseitig und ausiegerarmseitig in einem definierten festen Abstand zueinander drehbar gelagert sind - mit dem Auslegerarm verbunden sein.

Dadurch ist die Neigung des Arbeitswerkzeugs relativ zum Auslegerarm bzw. relativ zur Deichsel einstellbar. Das Viergelenk bildet einen Momentanpol, der sich aus der Schnittlinie von Oberlenker und Unterlenker ergibt, wobei dieser vorzugsweise hinter dem Auslegerarm und unter dem Bodenniveau liegt. Eine relative Auslenkung des Arbeitswerkzeugs relativ zum Auslegerarm führt aufgrund dieser Anordnung zu einer Winkelveränderung des Arbeitswerkzeugs, wodurch eine verbesserte Bodenanpassung gewährleistet wird.

Gemäß einer weiteren bevorzugten Ausführungsform, kann der Auslegerarm, insbesondere in Querrichtung, teleskopierbar ausgebildet sein. Durch die teleskopierbare Ausbildung des Auslegerarms kann das Arbeitswerkzeug im Abstand zur Deichsel verändert werden.

Dies erlaubt für den Fall, dass das Arbeitswerkzeug als ein einen Erntegutaufnehmer umfassenden Bandschwader ausgebildet ist, die Einstellungsmöglichkeit, ob ein Schwad seitlich oder mittig abgelegt werden soll. Zudem kann bei mittiger Ablage die Breite des Schwads reguliert und an die Bedürfnisse der nachfolgenden Erntemaschinen, wie Rundballenpresse, Ladewagen und/oder Häcksler angepasst werden.

Alternativ zum Bandschwader oder Merger kann das Arbeitswerkzeug auch als Mähwerk ausgebildet sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine perspektivische Ansicht eines erfindungsgemäßen Maschinenrahmens in Arbeitsstellung;
- Fig. 1b: eine perspektivische Ansicht eines erfindungsgemäßen Maschinenrahmens in Schwenkstellung;
- Fig. 1c: eine perspektivische Ansicht eines erfindungsgemäßen Maschinenrahmens in Transportposition;
- Fig. 2a: eine Seitenansicht eines erfindungsgemäßen Maschinenrahmens in Arbeitsstellung;
- Fig. 2b: eine Seitenansicht eines erfindungsgemäßen Maschinenrahmens in Schwenkstellung;
- Fig. 2c: eine Seitenansicht eines erfindungsgemäßen Maschinenrahmens in Transportposition;
- Fig. 3a: eine Seitenansicht eines erfindungsgemäßen Bandschwaders in Arbeitsposition;
- Fig. 3b: eine Seitenansicht eines erfindungsgemäßen Bandschwaders in Schwenkposition;
- Fig. 3c: eine Seitenansicht eines erfindungsgemäßen Bandschwaders in Transportposition;
- Fig. 4: eine Teil- Rückansicht eines erfindungsgemäßen Maschinenrahmens in Arbeitsposition;
- Fig. 5: eine Schnittansicht eines Bandschwader in Arbeitsposition, und
- Fig. 6: eine Rückansicht einer Zugmaschine mit einem Bandschwader mit nur einer Bandschwadereinheit in Transportposition.

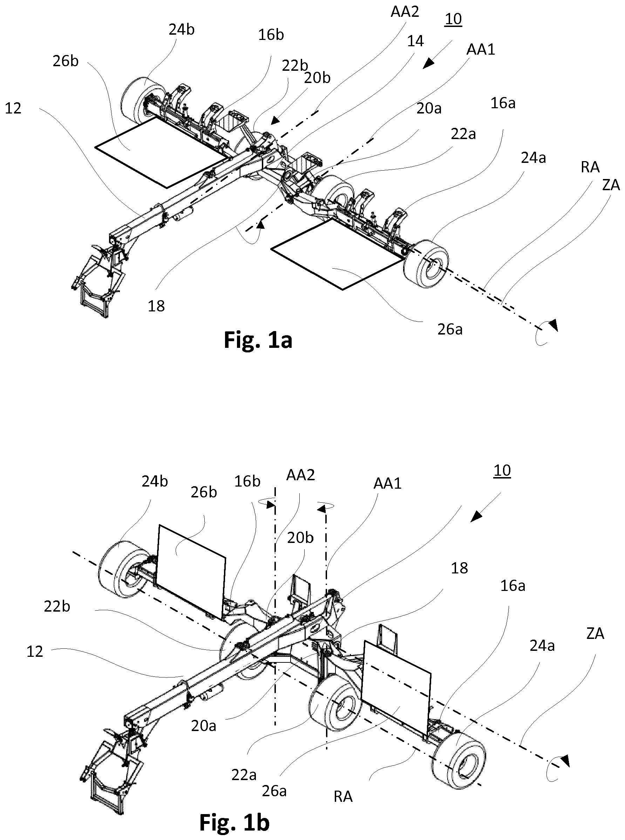

Fig. 1a zeigt eine landwirtschaftliche Maschine 10 mit einer Deichsel 12, an der ein von Haupträdern 22a, 22b getragener Zentralrahmen 14 um ein Zentralrahmenlager 18 schwenkbar gelagert ist. Das Zentralrahmenlager 18 definiert dabei die Drehachse ZA. Am Zentralrahmen 14 sind über Auslegerlager 20a, 20b Auslegerarme 16a, 16b schwenkbar am Zentralrahmen 14 gelagert. Die Auslegerlager 20a, 20b sind so gestaltet, dass diese eine Drehachse AA1, AA2 definieren, um die die Auslegerarme 16a, 16b schwenken. Die Auslegerarme 16a, 16b werden jeweils von einem Auslegerrad 24a, 24b getragen. Dies sorgt für eine ideale vertikale Bodenanpassung der Auslegerarme 16a, 16b. Exemplarisch ist ein schematisches Arbeitswerkzeug 26a, 26b angedeutet, das jeweils an den Auslegerarmen 16a, 16b angeordnet ist. Die schematische Darstellung steht stellvertretend für Arbeitswerkzeuge zur Grünlandbearbeitung wie beispielsweise Mähwerk, Bandschwader o.ä.

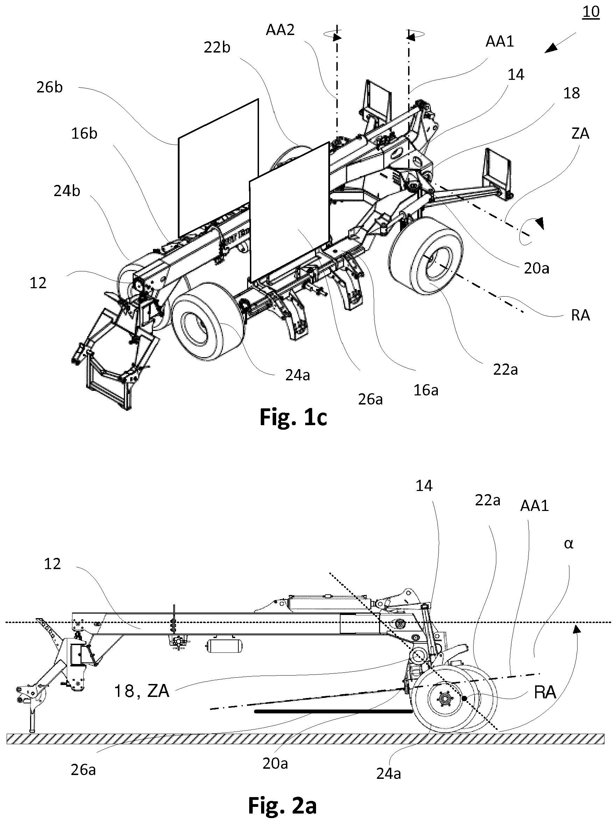

Wie Fig. 1a zu entnehmen ist, ist die Radachse RA parallel zur Zentralrahmenlager-Achse ZA angeordnet, wobei beide Achsen orthogonal zur Deichsel 12 liegen. Aufgrund der erfindungsgemäßen Anordnung kann eine schnelle und effektive Anpassung von der in Fig. 1a dargestellten Arbeitsposition in eine wie in Fig. 1c dargestellte Transportposition der landwirtschaftlichen Maschine 10 erfolgen.

Fig. 1b zeigt einen Übergangszustand des Zusammenklappvorgangs. Wie Fig. 1b zu entnehmen ist, wird zuerst der Zentralrahmen 14 um die Zentralrahmen-Achse ZA geschwenkt. Dies hat zur Folge, dass bei der Schwenkbewegung um etwa 90° die Arbeitswerkzeuge 26a, 26b von der horizontalen Arbeitsposition in eine Vertikal-Position gestellt werden. Die Drehung um die Zentralrahmen-Achse ZA erfolgt so, dass die Auslegerlager-Achsen AA1, AA2 etwa vertikal stehen. Zur Verschwenkung des Zentralrahmens 14 gegenüber der Deichsel 12 ist ein den Zentralrahmen 14 mit der Deichsel 12 verbindender Hydraulikkolben 28 vorgesehen. Aufgrund des Versatzes des Auslegerrades 24a gegenüber dem Hauptrad 22a (auch zutreffend für die symmetrische Gestaltung des zweiten Auslegerarmes, die Haupträder 22b und das Auslegerad 24b) ergibt es sich, dass bei gemeinsamem Verschwenken des Zentralrahmens 14 zusammen mit den Auslegerarmen 16a, 16b um die Zentralrahmen-Achse ZA die Auslegerräder 24a, 24b vom Boden abgehoben werden. Dies wird in den nachfolgenden Figuren 2a bis 2c näher beschrieben. Ausgehend von dieser Vertikalstellung der Arbeitswerkzeuge 26a, 26b erfolgt ein Verschwenken der Auslegerarme 16a, 16b, um von dieser Vertikalstellung in die letztendliche Transportposition zu gelangen. Dazu werden die Auslegerarme 16a, 16b um die Auslegerlager-Achse AA1, AA2 um 90° nach vorne geschwenkt. Dadurch kommen die im Wesentlichen vertikal anliegenden Arbeitswerkzeuge 26a, 26b in eine im Wesentlichen parallele Lage zur Deichsel 12. Zur Verschwenkung der Auslegerarme 16a, 16b ist ein Hydraulikkolben 29a, 29b angeordnet, der den Auslegerarm 16a, 16b mit dem Zentralrahmen 14 verbindet.

Wie der Fig. 1c zu entnehmen ist, kommen in Transportposition die Auslegerräder 24a, 24b quer zur Fahrtrichtung zu Liegen. Die Auslegerlagerachsen AA1, AA2 liegen in Transportposition in vertikaler Richtung zwischen den Haupträdern 22a, 22b und der Deichsel 12. Dies führt dazu, dass eine maximale Durchgangsbreite des Zentralrahmens 14 ermöglicht werden kann, wobei dennoch eine minimale Transportbreite ermöglicht wird.

Die Durchgangsbreite des Zentralrahmens 14 ist insbesondere von Bedeutung, wenn Arbeitswerkzeuge in Form von Schwadern ausgestaltet sind. Dadurch kann eine Stauung von Erntegut, insbesondere bei einer Mittenschwaderablage, in diesem Bereich vermieden werden.

Die Fig. 2a bis 2c zeigen den in den Fig. 1a bis 1c dargestellte landwirtschaftliche Maschine in einer Seitenansicht in denselben Positionen.

Wie Fig. 2a zeigt, ist die Radachse RA der Haupträder 22a, 22b entgegen der Fahrtrichtung zur Zentralrahmenachse beabstandet. Der Abstand ist so gewählt, dass die Verbindungslinie der Radachse mit der Zentralrahmenlager-Achse ZA einen Winkel α mit der Horizontalen einschließt. Diese liegt vorzugsweise in einem Bereich von 30° bis 60°. Ein solcher Winkel führt dazu, dass bei einer Verschwenkung des Zentralrahmens 14 um die Zentralrahmenlager-Achse ZA um etwa 90° bis 95° eine Verkürzung des Radstands (Abstand zum Zugfahrzeug) von der Arbeitsposition zur Transportposition ermöglicht wird.

Dies hat ein verbessertes Transportverhalten der Landmaschine zur Folge, was sich insbesondere bei Kurvenfahrten positiv auswirkt.

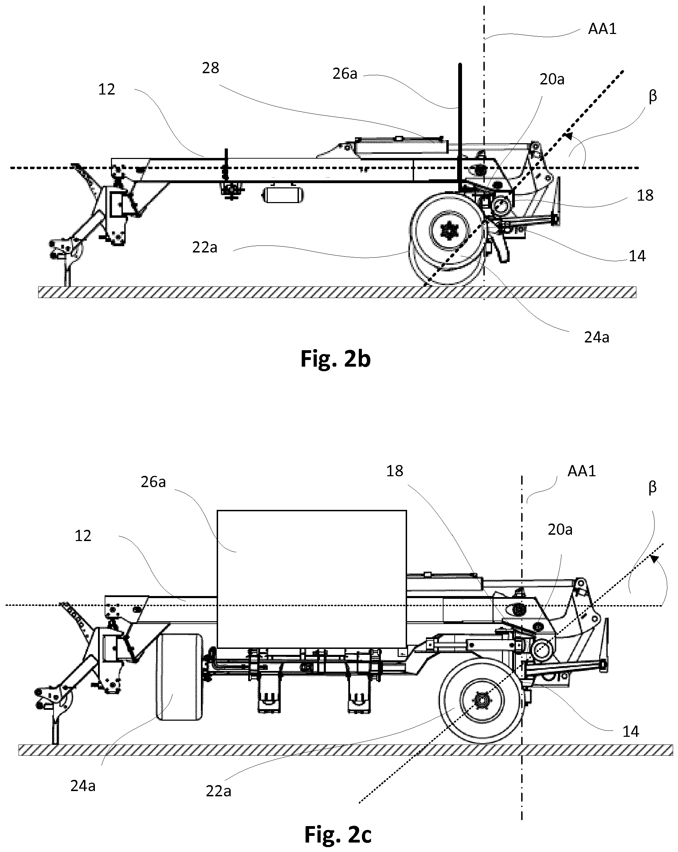

Gemäß Fig. 2b ist die Übergangsposition, in welcher die Arbeitswerkzeuge 26a, 26b in Vertikallage ausgerichtet sind, wie bereits in Fig. 1b beschrieben, dargestellt.

Wie gut in Fig. 2b zu erkennen ist, können bei Verschwenken des Zentralrahmens 14 um die Zentralrahmenlagerachse ZA die Auslegerarme 24a, 24b automatisch vom Boden beabstandet gehalten werden.

In Transportposition schließt die Verbindungslinie von Hauptradachse RA und Zentralrahmenlager-Achse ZA mit der Horizontalen einen Winkel β ein. Dieser liegt vorzugsweise ebenfalls in einem Bereich von 30° bis 60°. Über diesen Winkel kann die Transporthöhe beeinflusst werden. Wie im Vergleich mit Fig. 2a zu erkennen, entspricht der Abstand des Auslegerrads 24a vom Boden etwa dem Überstandsbereich des Hauptrads 22a entgegen der Fahrtrichtung gegenüber dem Auslegerrad 24a.

Fig. 2c zeigt schließlich die Transportposition nach Schwenken des Auslegerarms 16a, 16b um die Auslegerachse AA1, AA2. Besonders gut zu erkennen ist gemäß Fig. 2c der verkürzte Radstand, also der Abstand zwischen Zugmaschine und dem Hauptrad 22a, 22b in der Transportposition gegenüber der Arbeitsposition.

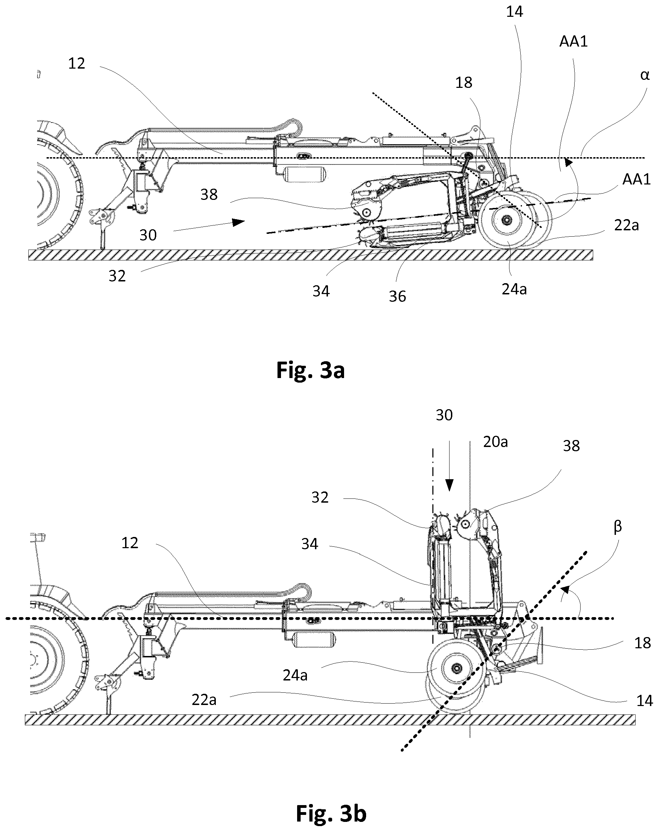

Die Fig. 3a bis 3c zeigen eine wie vorangegangen beschriebene landwirtschaftliche Maschine, wobei hier das Arbeitswerkzeug als Pickup-Bandschwader 30 bzw. Merger ausgebildet ist. Der Pickup-Bandschwader 30 umfasst dabei ein Förderband 34 sowie einen Erntegutaufnehmer 32 (Pick-Up), wobei diese Funktionseinheiten von einem U-Profilrahmen 36 getragen werden, an welchem gegenüber dem Erntegutaufnehmer ein Rotor 38 zur Weiterförderung des vom Erntegutaufnehmer 32 aufgenommenen Ernteguts angeordnet ist.

Besonders gut in Fig. 3a zu erkennen ist die Lage der Auslegerlagerachse AA1, die gegenüber der Horizontalen geneigt ist. Die Auslegerlagerachse AA1 verläuft dabei so, dass diese einen Abstand zur Welle des Erntegutaufnehmers aufweist, der kleiner als das 0,7 fache des Abstands der Horizontalebene, in der die Mittelpunkte der Wellenlager bei ebenem Boden liegen, zur Auslegerachse AA1 im niedrigsten Punkt des Auslegerlagers 20a ist. Dies sorgt dafür, dass bei einer Verschwenkung des Pick-Up-Bandschwaders 30 um die Auslegerachse AA1 eine Kollision der dargestellten Einheit mit der benachbarten (nicht dargestellten) Arbeitseinheiten in der Mitte des Rahmens vermieden werden kann.

Wie Fig. 3b zeigt, kann über die Viergelenks-Anordnung auch die Ausrichtung des Pick-Up-Bandschwaders 30 in Transportlage beeinflusst werden. Die Einstellung kann so gewählt sein, dass eine minimale Transportbreite erreicht werden kann.

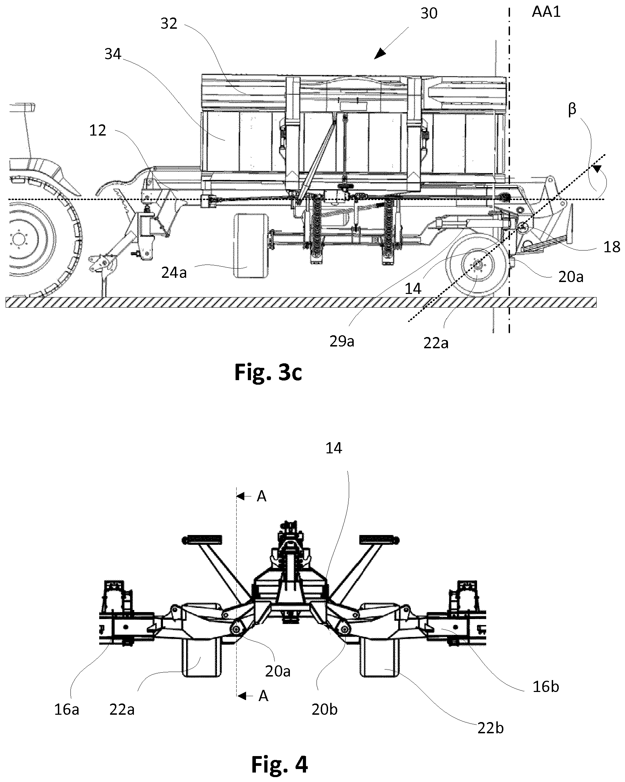

Fig. 3c zeigt schlussendlich die Lage der Erntemaschine in Transportposition, wobei besonders gut wieder die Verkürzung des Radstandes, des Abstandes der Achse des Hauptrads 22a zur Zugmaschine gegenüber der Arbeitsposition zu erkennen ist.

Fig. 4 zeigt eine erfindungsgemäße landwirtschaftliche Maschine in Rückansicht. Besonders gut an dieser Darstellung zu erkennen ist, dass der Zentralrahmen 14 als im Wesentlichen U-förmiges Profil ausgebildet ist, Am unteren Rahmenende sind die Achsen der Haupträder 22a, 22b angeordnet. Dies sorgt für eine besonders große Durchgangshöhe.

Die Auslegerlager 20a, 20b sind zwischen den Haupträdern 22a, 22b und der Deichsel 12 angeordnet. Dadurch kann eine maximale Durchgangsbreite bei einem vorgegebenen Radabstand ermöglicht werden, wobei sich der Radabstand an Transportgegebenheiten bzw. Verkehrsanforderungen richtet. Ferner ist die Schnittlinie A-A dargestellt, an der ein Bandschwader gemäß Figur 3a geschnitten ist.

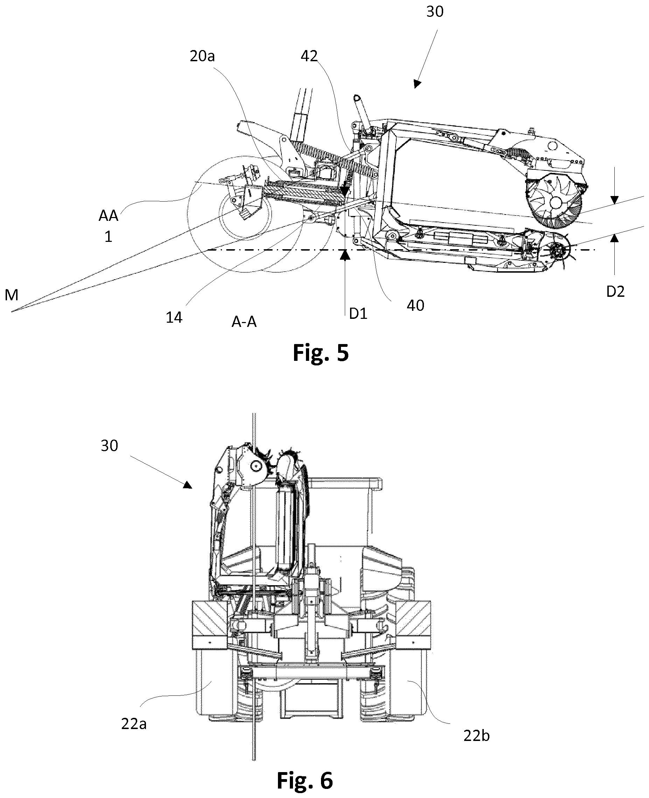

Fig. 5 zeigt eine Schnitt-Ansicht eines Bandschwaders 30 gemäß der in Fig. 4 dargestellten Schnittlinie A-A. Besonders gut ist die Gestaltung des Zentralrahmens 14 zu erkennen, an welchem die Auslegerachsen AA1, AA2 geneigt angeordnet sind. Bei ebenem Boden ist der Abstand D1 von der horizontalen Wellenebene, in welcher die Welle des Erntegutaufnehmers liegt, zum niedrigsten Punkt der Auslegerlager-Achse AA1 im Auslegerlager 20a, 20b hierbei größer als der Abstand D2 der Auslegerlagerachse AA2 zur Wellenachse des Erntegutaufnehmers. D1 entspricht erfindungsgemäß D1> 1,5 D2. Der Abstand D2 von der Wellenachse zur Auslegerlagerachse AA1 ist größer als der Abstand der Wellenachse zum Boden.

Die Bandschwadereinheit 30 ist über eine Lenkeranordnung (Viergelenk) umfassend Lenker 40, 42 an den Auslegerarm 16a angebunden. Durch die Lenkeranordnung kann eine Vertikalbewegung von einer Winkelbewegung um den Momentanpol M überlagert werden. Die Lenkeranordnung ist so gewählt, dass der Momentanpol in Arbeitsposition bei ebenem Boden in Fahrtrichtung hinter dem Auslegerarm und unter dem Bodenniveau liegt. Dies sorgt für eine besonders gute Bodenanpassung des Erntegutaufnehmers in Arbeitsposition.

Fig. 6 zeigt eine erfindungsgemäße Maschine in Transportposition, wobei gut zu erkennen ist, dass die Bandschwadereinheit 30 den durch die Haupträder 22a, 22b vorgegebenen Maximalabstand nicht überschreitet. Auf diese Weise können zweiflüglige Arbeitsmaschinen mit hohen Arbeitsbreiten des Einzelarbeitselementes von jeweils mehr als 4 m problemlos für herkömmliche Straßenverhältnisse mit einer vorgeschriebenen Maximalbreite, insbesondere 2,5m oder 3m, ausgeführt werden.

### Bazugszeichenliste

- 10: landwirtschaftliche Maschine
- 12: Deichsel
- 14: Zentralrahmen
- 16a, 16b: Auslegerarme
- 18: Zentralrahmenlager
- 20a, 20b: Auslegerlager
- 22a, 22b: Haupträder
- 24a, 24b: Auslegerräder
- 26a, 26b: Arbeitswerkzeuge
- 28: Hydraulikkolben
- 29a, 29b: Hydraulikkolben
- 30: Bandschwadereinheit
- 32: Erntegutaufnehmer
- 34: Förderband
- 36: Profilrahmen
- 38: Rotor
- 40: Lenker
- 42: Lenker

- AA1, AA2: Auslegerlager-Achse
- D1: Abstand Wellenebene- Auslegerlager-Achse (im Tiefpunkt Auslegerlager)
- D2: Abstand Wellenachse- Auslegerlager-Achse
- M: Momentanpol
- RA: Hauptradachse
- ZA: Zentralrahmenlager-Achse

## Patentansprüche

1. Landwirtschaftliche Maschine (10) zur Bearbeitung von Grünland umfassend einen Maschinenrahmen, der eine Deichsel (12) zur Verbindung mit einer Zugmaschine und einen mit der Deichsel (12) verbundenen von Haupträdern (22a, 22b) getragenen Zentralrahmen (14) aufweist, wobei die Haupträder (22a, 22b) den Zentralrahmen (14) sowohl in einer Transport- als auch in einer Arbeitsposition tragen, wobei ferner an dem Zentralrahmen (14) über ein Auslegerlager (20a, 20b), das eine Auslegerlager-Achse (AA1, AA2) definiert, wenigstens ein Ausleger verbunden ist, an welchem wenigstens ein Arbeitswerkzeug (26a, 26b; 30) anordbar ist, wobei das Arbeitswerkzeug (26a, 26b; 30) mit dem Ausleger um das Auslegerlager (20a, 20b) schwenkbar ist, wobei der Zentralrahmen (14) über ein Zentralrahmenlager (18), das eine Zentralrahmenlager-Achse (ZA) definiert, drehbar mit der Deichsel (12) verbunden ist, wodurch der Zentralrahmen (14) um die Zentralrahmenlager-Achse (ZA) zur Deichsel (12) drehbar ist, wobei der Zentralrahmen (14) in eine erste einer Arbeitsstellung zugeordneten Schwenkposition und in eine zweite einer Transportposition zugeordneten Schwenkposition bringbar ist, wobei ferner zwei Ausleger (16a, 16b) beidseitig des Zentralrahmens (14) vorgesehen sind, an welchen je wenigstens ein Arbeitswerkzeug (26a, 26b; 30) angeordnet ist, **dadurch gekennzeichnet, dass** das Arbeitswerkzeug (26a, 26b; 30) einen Erntegutaufnehmer (32) umfassend eine Welle aufweist, um welche Zinkenscheiben rotieren, und dass der Abstand (D1) von der horizontalen Wellenebene des Erntegutaufnehmers, in welcher die Welle liegt, zum niedrigsten Punkt der Auslegerlager-Achse (AA1, AA2) im Auslegerschwenklager mehr als das 1,5 fache des Abstands (D2) der Auslegerlager-Achse (AA1, AA2) zur Wellenachse beträgt.

2. Landwirtschaftliche Maschine nach Anspruch 1, **dadurch gekennzeichnet, dass** das Zentralrahmenlager (18) so ausgestaltet ist, dass die Zentralrahmenlager-Achse (ZA) parallel zur Achse der Haupträder (22a, 22b) ist.

3. Landwirtschaftliche Maschine nach einem der vorangehenden Ansprüche, **dadurch gekennzeichnet, dass** die Auslegerlager-Achse (AA1, AA2) orthogonal zur Zentralrahmenlager-Achse (ZA) liegt.

4. Landwirtschaftliche Maschine nach einem der vorangehenden Ansprüche, **dadurch gekennzeichnet, dass** die Haupträder (22a, 22b) derart mit dem Zentralrahmen (14) verbunden sind, dass bei Verschwenken des Zentralrahmens (14) die Räder der Schwenkbewegung des Zentralrahmens (14) folgen.

5. Landwirtschaftliche Maschine nach einem der vorangehenden Ansprüche, **dadurch gekennzeichnet, dass** eine Orthogonale auf die Radachse, die durch die Zentralrahmenlager-Achse (ZA) verläuft, in Betriebslage entgegen der Fahrtrichtung einen Winkel von 30° bis 60° mit der Deichsel (12) einschließt.

6. Landwirtschaftliche Maschine nach einem der vorangehenden Ansprüche, **dadurch gekennzeichnet, dass** am Ausleger (16a, 16b) ein Auslegerrad (24a, 24b) angeordnet ist.

7. Landwirtschaftliche Maschine nach Anspruch 6, **dadurch gekennzeichnet, dass** das Auslegerrad (24a, 24b) zum Hauptrad in Fahrtrichtung derart nach vorne versetzt ist, dass in Betriebslage das Hauptrad das Auslegerrad (24a, 24b) entgegen der Fahrtrichtung überragt.

8. Landwirtschaftliche Maschine nach einem der vorangehenden Ansprüche, **dadurch gekennzeichnet, dass** das Arbeitswerkzeug (26a, 26b) über ein Viergelenk mit dem Ausleger (16a, 16b) verbunden ist.

9. Landwirtschaftliche Maschine nach einem der vorangehenden Ansprüche, **dadurch gekennzeichnet, dass** das Auslegerlager (20a, 20b) derart angeordnet ist, dass die Auslegerlager-Achse (AA1, AA2)in Betriebslage in Fahrtrichtung gegenüber der Horizontalen geneigt ist.

10. Landwirtschaftliche Maschine nach einem der vorangehenden Ansprüche, **dadurch gekennzeichnet, dass** das Auslegerlager (20a, 20b) eine axiale Ausdehnung von 500 mm bis 1000 mm hat.

11. Landwirtschaftliche Maschine nach einem der vorangehenden Ansprüche, **dadurch gekennzeichnet, dass** das Auslegerlager (20a, 20b) in Horizontalquerrichtung zwischen der Deichsel (12) und den Haupträdern (22a, 22b) angeordnet ist.

12. Landwirtschaftliche Maschine nach einem der vorangehenden Ansprüche, **dadurch gekennzeichnet, dass** der Ausleger (16a, 16b) teleskopierbar ausgebildet ist.

## Claims

1. Agricultural machine (10) for working grassland, comprising a machine frame having a drawbar (12) for coupling to a tractor and a central frame (14) which is connected to the drawbar (12) and mounted on main wheels (22a, 22b), which main wheels (22a, 22b) are adapted to support the central frame (14) both in a transport position and a working position thereof, wherein at least one boom is furthermore connected to the central frame (14) via a boom support (20a, 20b) which latter defines a boom support axis (AA1, AA2), wherein at least one working tool (26a, 26b; 30) can be arranged on the boom, which working tool (26a, 26b; 30) is adapted to be pivoted, together with the boom, about the boom support (20a, 20b), which central frame (14) is rotatably connected to the drawbar (12) via a central frame support (18) which latter defines a central frame support axis (ZA), which enables the central frame (14) to be rotated about the central frame support axis (ZA) relative to the drawbar (12), wherein the central frame (14) is movable into a first pivot position, which is associated with an operating position, and into a second pivot position, which is associated with a transport position, wherein furthermore two booms (16a, 16b) are provided on either side of the central frame (14), each boom (16a, 16b) having at least one working tool (26a, 26b; 30) mounted thereon, **characterized in that** the working tool (26a, 26b; 30) includes a crop collecting device (32) comprising a shaft having tined wheels mounted thereon for rotation therewith, and that the distance (D1) from the horizontal shaft plane of the crop collecting device, in which plane the shaft lies, to the lowermost point of the boom support axis (AA1, AA2) in the pivot mount of the boom is more than 1.5 times the distance (D2) from the boom support axis (AA1, AA") to the shaft axis,

2. Agricultural machine according to claim 1, **characterized in that** the central frame support (18) is designed such that the central frame support axis (ZA) is parallel to the axis of the main wheels (22a, 22b).

3. Agricultural machine according to one of the preceding claims, **characterized in that** the boom support axis (AA1, AA2) is perpendicular to the central frame support axis (ZA).

4. Agricultural machine according to one of the preceding claims, **characterized in that** the main wheels (22a, 22b) are connected the central frame (14) in such a way that pivoting the central frame (14) causes the wheels to follow the pivot movement of the central frame (14).

5. Agricultural machine according to one of the preceding claims, **characterized in that** in its operating position against the direction of travel, a perpendicular to the wheel axle, which extends through the central frame support axis (ZA), encloses an angle of between 30° and 60° with the drawbar (12).

6. Agricultural machine according to one of the preceding claims, **characterized in that** a boom wheel (24a, 24b) is arranged on the boom (16a, 16b).

7. Agricultural machine according to claim 6, **characterized in that** the boom wheel (24a, 24b) is forwardly offset with respect to the main wheel in the direction of travel such that, in the operating position, the main wheel projects beyond the boom wheel (24a, 24b) against the direction of travel.

8. Agricultural machine according to one of the preceding claims, **characterized in that** the working tool (26a, 26b) is connected to the boom (16a, 16b) via a four-bar mechanism.

9. Agricultural machine according to one of the preceding claims, **characterized in that** the boom support (20a, 20b) is arranged such that, in the operating position, the boom support axis (AA1, AA2) is inclined relative to the horizontal in the direction of travel.

10. Agricultural machine according to one of the preceding claims, **characterized in that** the boom support (20a, 20b) has an axial extent of between 500 mm and 1,000 mm.

11. Agricultural machine according to one of the preceding claims, **characterized in that** the boom support (20a, 20b) is arranged in a horizontally transverse direction between the drawbar (12) and the main wheels (22a, 22b).

12. Agricultural machine according to one of the preceding claims, **characterized in that** the boom (16a, 16b) is of a telescopic design.

## Revendications

1. Machine agricole (10) pour le travail des surfaces herbagères, comprenant un châssis de machine pourvu d'un timon (12) pour l'attelage avec un véhicule tracteur et d'un châssis central (14) raccordé au timon (12), supporté par des roues principales (22a, 22b), dans laquelle lesdites roues principales (22a, 22b) supportent le châssis central (14) dans une position de transport ainsi que dans une position de travail, dans laquelle au moins un bras est en outre raccordé au châssis central (14) par un palier de bras (20a, 20b) définissant un axe de bras (AA1, AA2), sur lequel peut être mis en place au moins un outil de travail (26a, 26b ; 30), dans laquelle l'outil de travail (26a, 26b ; 30) est pivotant autour du palier de bras (20a, 20b) avec le bras, dans laquelle le châssis central (14) est raccordé de manière rotative au timon (12) par un palier de châssis central (18), lequel définit un axe de palier de châssis central (ZA), moyennant quoi le châssis central (14) est rotatif par rapport au timon (12) autour de l'axe de palier de châssis central (ZA), dans laquelle le châssis central (14) peut être mis dans une première position de pivotement associée à une position de travail et dans une deuxième position de pivotement associée à une position de transport, dans laquelle deux bras (16a, 16b) sont en outre prévus de part et d'autre du châssis central (14), sur chacun desquels est disposé au moins un outil de travail (26a, 26b ; 30), **caractérisée en ce que** l'outil de travail (26a, 26b ; 30) comporte un ramasseur (32) comprenant un arbre autour duquel sont rotatifs des disques dentés, et **en ce que** l'espacement (D1) entre le plan horizontal d'arbre du ramasseur où est situé l'arbre, et le point le plus bas de l'axe de palier de bras (AA1, AA2) dans le palier pivotant de bras est supérieur à 1,5 fois l'espacement (D2) entre l'axe de bras (AA1, AA2) et l'axe de l'arbre.

2. Machine agricole selon la revendication 1, **caractérisée en ce que** le palier de châssis central (18) est réalisé de telle sorte que l'axe de palier de châssis central (ZA) est parallèle à l'axe des roues principales (22a, 22b).

3. Machine agricole selon l'une des revendications précédentes, **caractérisée en ce que** l'axe de bras (AA1, AA2) est orthogonal à l'axe de palier de châssis central (ZA).

4. Machine agricole selon l'une des revendications précédentes, **caractérisée en ce que** les roues principales (22a, 22b) sont raccordées au châssis central (14) de telle manière qu'en cas de pivotement du châssis central (14), les roues suivent le mouvement de pivotement du châssis central (14).

5. Machine agricole selon l'une des revendications précédentes, **caractérisée en ce qu'**une orthogonale à l'axe des roues qui passe par l'axe de palier de châssis central (ZA), forme en position de service dans la direction contraire à la direction de conduite un angle compris entre 30° et 60° avec le timon (12).

6. Machine agricole selon l'une des revendications précédentes, **caractérisée en ce qu'**une roue de bras (24a, 24b) est montée sur le bras (16a, 16b).

7. Machine agricole selon la revendication 6, **caractérisée en ce que** la roue de bras (24a, 24b) est décalée vers la roue principale dans la direction de conduite, de telle manière qu'en position de service, la roue principale dépasse la roue de bras (24a, 24b) dans la direction contraire à la direction de conduite.

8. Machine agricole selon l'une des revendications précédentes, **caractérisée en ce que** l'outil de travail (26a, 26b) est raccordé au bras (16a, 16b) par une articulation à quatre points.

9. Machine agricole selon l'une des revendications précédentes, **caractérisée en ce que** le palier de bras (20a, 20b) est disposé de telle manière que l'axe de bras (AA1, AA2) est incliné par rapport à l'horizontale en position de service dans la direction de conduite.

10. Machine agricole selon l'une des revendications précédentes, **caractérisée en ce que** le palier de bras (20a, 20b) a une extension axiale comprise entre 500 mm et 1000 mm.

11. Machine agricole selon l'une des revendications précédentes, **caractérisée en ce que** le palier de bras (20a, 20b) est disposé entre le timon (12) et les roues principales (22a, 22b) dans la direction transversale horizontale,

12. Machine agricole selon l'une des revendications précédentes, **caractérisée en ce que** le bras (16a, 16b) est prévu télescopique.
